# EUROPÄISCHE PATENTSCHRIFT

(11) **EP 2 171 296 B1**
(45) Veröffentlichungstag und Bekanntmachung des Hinweises auf die Patenterteilung: **14.10.2015**
(21) Anmeldenummer: 07819809.0
(22) Anmeldetag: 14.11.2007
(51) Int. Cl.: F16C 19/18, F16C 35/063

(54) **VORRICHTUNG ZUM AXIALEN VORSPANNEN EINES MASCHINENELEMENTES**
DEVICE FOR AXIALLY PRELOADING A MACHINE ELEMENT
DISPOSITIF POUR LA PRÉCONTRAINTE AXIALE D'UN ÉLÉMENT DE MACHINE

(30) Priorität: 22.06.2007 DE 102007028948
(43) Veröffentlichungstag der Anmeldung: 07.04.2010
(73) Patentinhaber: Audi AG, 85045 Ingolstadt (DE)
(72) Erfinder: RUSTEBERG, Stefan, 38550 Isenbüttel (DE); VOLLHÜTER, Friedrich, 85049 Ingolstadt (DE); SENG, Karl, 85716 Unterschleissheim (DE)
(74) Vertreter: Lehle, Josef
(86) Internationale Anmeldenummer: PCT/EP2007/009853
(87) Internationale Veröffentlichungsnummer: WO 2009/000308

(56) Entgegenhaltungen:
- US-A- 3 952 608
- US-A- 4 798 560

## Beschreibung

Die Erfindung betrifft eine Vorrichtung zum axialen Vorspannen eines Maschinenelementes gemäß dem Oberbegriff des Patentanspruches 1. Eine derartige Vorrichtung ist z.B. aus US 3 952 608 bekannt.

Eine weitere Vorrichtung zeigt beispielsweise die US 4,798,560 anhand einer Radlagerung für Räder von Kraftfahrzeugen. Dabei ist das doppelreihige Wälzlager zwischen dem Radträger und der Flanschwelle mit dessen Innenring über eine ringförmige, im Querschnitt etwa V-förmige Stahlfeder und einem eingesprengten Sicherungsring gegen einen Ringbund der Flanschwelle vorgespannt. Der Sicherungsring kann somit Fertigungstoleranzen und ggf. Setzvorgänge unter Aufrechterhaltung einer relativ gleichmäßigen Vorspannung ausgleichen. Es versteht sich, dass die Vorspannung größer als die maximal auftretende Betriebslast sein muss.

Aufgabe der Erfindung ist es, eine Vorrichtung der gattungsgemäßen Art zu schaffen, die mit einfachen Mitteln einen größeren Toleranzausgleich bei hohen Vorspannungswerten ermöglicht und somit ein erweitertes Einsatzgebiet bietet. Als Maschinenelemente kommen beispielsweise hochbelastete Wälzlagerungen oder Lamellenkupplungen in Frage.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Stahlfeder mit dem rotationssymmetrischen, halbkreisförmigen Abschnitt mit einem im wesentlichen gleichmäßigen Radius R1 mittel- oder unmittelbar über einen kleineren Radius R2 in den Ringbund übergeht. Diese Konzeption der Stahlfeder ergibt einen weitgehend gleichmäßigen Spannungsverlauf mit günstigem Übergang über den Radius R2 in den Ringbund, der an dem vorzuspannenden Maschinenelement anliegt. Der halbkreisförmige Abschnitt kann bogenförmig mit stetigen, tangentialen Übergängen mit geringen, unterschiedlichen Radien R1 ausgeführt und ggf. nach Verhältniszahlen definiert sein.

Gemäß der Erfindung ist zwischen dem halbkreisförmigen Abschnitt und dem Radius R2 des Ringbundes ein einen definierten Winkel W1 zu einer Senkrechten von zwischen +- 10 Grad, insbesondere um ca. +5 Grad aufweisender, linearer Übergangsbereich vorgesehen, der tangential in die anschließenden Radien R1, R2 übergeht. Dies trägt dazu bei, dass ein noch günstigerer Spannungsverlauf mit gleichmäßig anliegenden Druckspannungen verwirklicht werden kann.

Erfindungsgemäß ist zur Erzielung einer zuverlässigen Zentrierung an die Stahlfeder dem Ringbund axial gegenüberliegend ein Montagebund angeformt, der mit einer Anlagefläche an dem Sicherungselement anliegt, wobei der Montagebund mit einem Radius R4 mittel- oder unmittelbar in den halbkreisförmigen Abschnitt der Stahlfeder übergeht.

Erfindungsgemäß ist zwischen dem halbkreisförmigen Abschnitt und dem Radius R4 des Montagebundes ebenfalls ein linearer Übergangsbereich vorgesehen, der einen Winkel W2 zu einer Senkrechten von zwischen + 5 bis + 15 Grad aufweist und der tangential in die anschließenden Radien R2 und R4 übergeht, mit wiederum den Vorteil einer gleichmäßigeren Spannungsbeaufschlagung.

Bei Verwendung eines einzusprengenden Sicherungsringes an der Stahlfeder weist der axial ausgerichtete Montagebund erfindungsgemäß an seinem Außenumfang eine gestufte Ausbildung zum Übergangsbereich oder halbkreisförmigen Abschnitt der Stahlfeder auf, der in vorteilhafter Weise zum Ansetzen einer Montagevorrichtung dient.

In vorteilhafter Weise kann die Wanddicke T der Stahlfeder nicht mehr als 15% ungleich, bevorzugt jedoch konstant sein. Geringe Abweichungen der Wanddicke können sich beispielsweise durch das Fertigungsverfahren bzw. durch Biegevorgänge im Bereich insbesondere der Radien R2 und R4 ergeben.

Desweiteren sollte der engste Querschnitt der Wanddicke T im Bereich des Radius R4 bei einer gestuften Ausbildung am Außenumfang des Ringbundes nicht kleiner als 60% betragen, um unzulässige Spannungen in diesem Bereich auszuschließen.

Besonders vorteilhaft kann die Stahlfeder konstruktiv in ihrer Länge, Wanddicke und/oder Festigkeit so ausgeführt sein, dass sie bei der Montage im elastisch/plastischen Bereich verformbar ist, wobei die Montagekraft > als die Vorspannkraft und diese > als die auftretende Betriebslast sein muss. Diese selbstverständlich in einem eng begrenzten Bereich aufgebrachte, plastische Verformung ermöglicht einen noch vergrößerten Toleranzausgleich durch die Stahlfeder bei definierten Vorspannungswerten.

Das Maschinenelement kann bevorzugt ein doppelreihiges Wälzlager sein, das in einem Getriebegehäuse angeordnet ist und zwei Lagerinnenringe aufweist, die einerseits axial an einem mit der Welle festen Bauteil anliegen und andererseits über die Stahlfeder und das Sicherungselement axial vorgespannt sind. Bei dieser hochbelasteten Gattung von Wälzlagerungen wird über die Stahlfeder sowohl die Lagervorspannung unter Ausgleich von Setzerscheinungen, Einlaufvorgängen, Lagerverschleiß, etc. ausgeglichen und zudem die gesamte Betriebslast aufgenommen.

Schließlich wird vorgeschlagen, dass das Sicherungselement ein in eine Ringnut der Welle einsprengbarer Sicherungsring ist, der bei einfacher Montage und geringem fertigungstechnischem Aufwand eine zuverlässige Axialsicherung darstellt. Das Sicherungselement kann aber beispielsweise auch eine auf die Welle aufgeschraubte Gewindemutter sein.

Ein Ausführungsbeispiel der Erfindung ist im Folgenden mit weiteren Einzelheiten näher erläutert. Die schematische Zeichnung zeigt in:
- Fig. 1: eine Vorrichtung zum Vorspannen eines doppelreihigen Wälzlagers zwischen einer ein Kegelritzel tragenden Welle und einem Getriebegehäuse, mit einer ringförmigen Stahlfeder und einem Sicherungsring;
- Fig. 2: die Stahlfeder gemäß Fig. 1 in vergrößerter Darstellung; und
- Fig. 3: ein Kraft-Weg-Diagramm der Stahlfeder gemäß den Fig. 1 und 2.

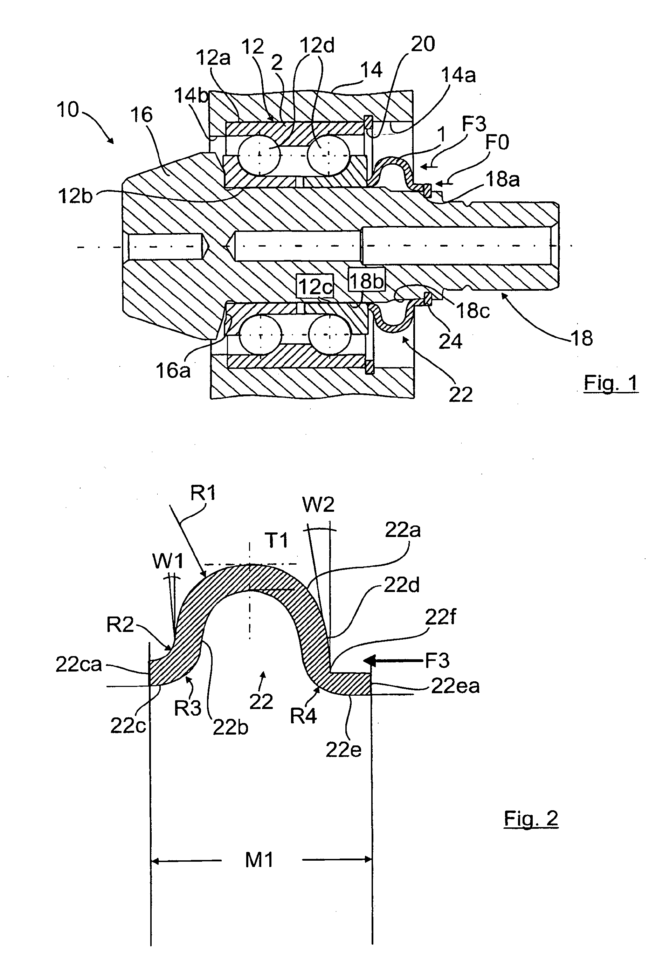

In der Fig. 1 ist mit 10 eine Vorrichtung zum Vorspannen eines Maschinenelementes, hier eines doppelreihigen Wälzlagers bzw. Schrägkugellagers 12 zwischen einem nur teilweise dargestellten Getriebegehäuse 14 und einer ein Kegelritzel 16 tragenden Welle 18 dargestellt.

Der Lageraußenring 12a des Kugellagers 12 ist in eine Bohrung 14a des Getriebegehäuses 14 eingesetzt und einerseits an einen Ringbund 14b und andererseits mittels eines eingesprengten Sicherungsringes 20 axial gehalten.

Die beiden Lagerinnenringe 12b, 12c des Kugellagers 12 sind auf die Welle 18 aufgepresst, wobei der Lagerinnenring 12b an einer Radialfläche 16a des Kegelritzels 16 anliegt, während der zweite Lagerinnenring 12c über eine ringförmige, rotationssymmetrische Stahlfeder 22 und einen in eine Ringnut 18a der Welle 18 eingesprengten Sicherungsring 24 axial und unter Vorspannung gehalten ist. Die von der Stahlfeder 22 ausgeübte Vorspannung überträgt sich durch die geteilten Lagerinnenringe 12b, 12c mit einem dazwischen befindlichen Ringspalt auf das Schrägkugellager 12 mit den eingesetzten Kugeln 12d und stellt eine spielfreie, unter Vorspannung stehende Lagerung sicher.

Gemäß Fig. 2 weist die Stahlfeder 22 einen halbkreisförmigen Abschnitt 22a mit einem Radius R1 auf, der wälzlagerseitig über einen linearen Übergangsbereich 22b und einen gegenläufigen Radius R2 bzw. R3 in einen Ringbund 22c übergeht. Der Ringbund 22c liegt mit einer radial ausgerichteten Anlagefläche 22ca an dem Lagerinnenring 12c des Kugellagers 12 an.

Der halbkreisförmige Abschnitt 22a kann auch bogenförmig mit geringen, unterschiedlichen Radien R1 ausgeführt sein, die tangential ineinander übergehen und ggf. durch Verhältniszahlen definiert sind.

Ferner geht der halbkreisförmige Abschnitt 22a der Stahlfeder 22 über ebenfalls einen linearen Übergangsbereich 22d und über einen gegenläufigen Radius R4 in einen wiederum axial gerichteten Montagebund 22e über, der sich im montierten Zustand an dem Sicherungsring 24 mit einer radial verlaufenden Anlagefläche 22ea abstützt. An seinem Außenumfang geht der Montagebund 22e gestuft bei 22f in den linear verlaufenden Übergangsbereich 22d über. Dadurch ist eine ringförmige, plane Anlagefläche für ein hülsenförmiges Montagewerkzeug (nicht dargestellt) zur günstigen Einleitung hoher Montagekräfte geschaffen.

Die Übergangsbereiche 22b und 22d sind in einem Winkel W1 bzw. W2 von3 Grad bzw. + 10 Grad zu einer zur Drehachse der Welle 18 gelegten Senkrechten geneigt ausgeführt (vgl. Fig. 2) und laufen jeweils tangential in die angrenzenden Bereiche bzw. die Radien R1, R2, R3 bzw. R1, R4 ein.

Die Wanddicke T der Stahlfeder 22 ist konstant ausgeführt, wobei jedoch aufgrund der gestuften Gestaltung bei 22f am Montagebund 22e eine Querschnittsverminderung um ca. 20% der Wanddicke T gegeben ist.

Ferner sind im Ausführungsbeispiel die Innendurchmesser von Ringbund 22c und Montagebund 22e ungleich groß ausgeführt, zur Sicherstellung einer exakten Zentrierung der Stahlfeder 22 auf der Welle 18 bzw. deren im Durchmesser ebenfalls unterschiedlichen Wellenabschnitte 18b, 18c (Fig. 1).

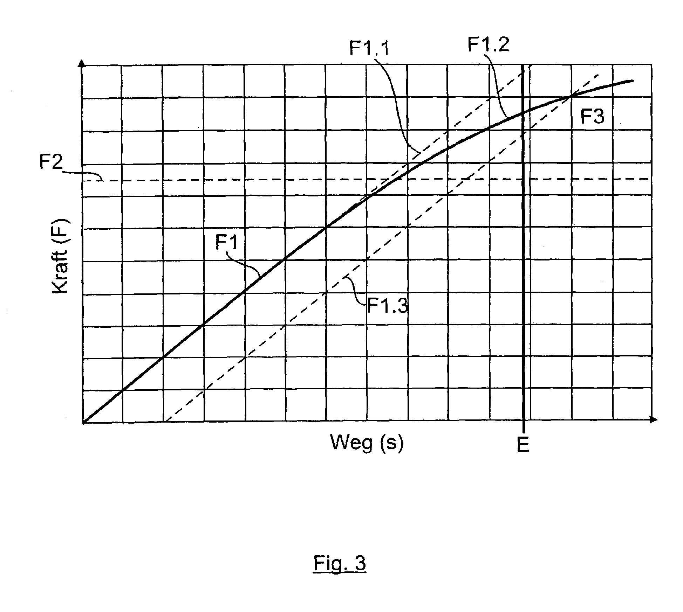

Die Fig. 3 zeigt ein Kraft-Weg-Diagramm der Stahlfeder 22 bzw. deren Vorspannungsverlauf. Die Vorspannkraft F ist über den Weg s der Stahlfeder 22 aufgetragen.

Dabei gibt die horizontale, gestrichelte Linie F2 die maximal auftretende Betriebskraft an, die über die Stahlfeder 22 abzustützen ist.

Die über den Weg s kontinuierlich ansteigende Linie F1 ist die mit zunehmender Kompression der Stahlfeder 22 ausgeübte Vorspannkraft, die bei einer konstruktiven Auslegung nur im elastischen Bereich die Kennlinie F1, F1.1 (gestrichelt anschließender Ast) aufweist. Die Vorspannkraft F1, F1.1 steigt kontinuierlich bis über die senkrecht eingezeichnete Linie E an. Die Linie E bezeichnet den Endmontagezustand der Stahlfeder 22, bei dem sich diese nach Einsprengen des Sicherungsringes 24 entsprechend abstützt. In diesem Zustand ist die Vorspannkraft FO (jeweils auf der Linie E) erreicht, die deutlich größer als F2 sein muss.

Ist die Stahlfeder 22 konstruktiv so ausgelegt, dass zum Ausgleich größerer Fertigungstoleranzen innerhalb der Vorrichtung 10 diese bei der Montage in den Bereich plastischer Verformung mit der Montagekraft F3 belastet wird, so entsteht die in durchgezogenen Linien eingezeichnete Kraft-Weg-Kennlinie gemäß F1, F1.2. Wie ersichtlich ist, geht die Vorspannkraft F1.2 im Übergang von der elastischen in die plastische Verformung in einen flacheren Kraftanstieg über, bei dem sich die Stahlfeder 22 an die tatsächlichen Wegverhältnisse anpasst. Im Endmontagezustand an der Senkrechten E liegt wiederum die etwas geringere Vorspannkraft FO an.

Die gestrichelte Linie F1.3 schließlich zeigt die Kraft-Weg-Kennlinie der Stahlfeder 22 im restelastischen Bereich / Hysterese, der sich aus der Überdrückung mit der Montagekraft F3 der im plastischen Bereich ausgelegten Stahlfeder 22 ergibt. Auch hier liegt die erforderliche Vorspannkraft FO noch über der Betriebskraft F2.

Die Stahlfeder 22 (Fig. 2) ist dabei konstruktiv in ihrer Länge M1, Wanddicke T und/oder Festigkeit (Wärmebehandlung) so ausgeführt, dass sie bei der Montage im plastischen Bereich verformbar ist, wobei die Montagekraft F3 größer als die Vorspannkraft FO und diese größer als die auftretende Betriebskraft F2 sein muss.

Die Montage der Stahlfeder 22 als Vorspannelement mit plastischem Verformungsbereich ist wie folgt:
Zunächst wird das Wälzlager 12 (Fig. 1) in üblicher Weise in das Getriebegehäuse 14 und auf die Welle 18 montiert. Anschließend wird die Stahlfeder 22 auf die Welle 18 aufgeschoben, bis sie mit ihrer Anlagefläche 22ca ihres Ringbundes 22c an dem Lagerinnenring 12c anliegt. Ferner wird der Sicherungsring 24 auf die Welle 18 aufgeschoben.

Sodann wird über den Montagebund 22e die Montagekraft F3 über ein nicht dargestelltes, hülsenförmiges Montagewerkzeug eingeleitet. Die Stahlfeder 22 wird somit zusammengedrückt. Im Kraft-Weg-Diagramm ergibt sich zunächst die elastische Kennlinie F1.

Mit weiterem Zusammendrücken der Stahlfeder 22 beginnt sich diese plastisch zu verformen. Im Kraft-Weg-Diagramm geht die elastische Kennlinie F1 in die sich abflachende, plastische Kennlinie F1.2 über.

Die Stahlfeder 22 wird soweit zusammengedrückt, bis die Ringnut 18a auf der Welle 18 frei liegt und der Sicherungsring 24 über das nicht dargestellte Montagewerkzeug eingesprengt werden kann. Sodann wird die Montagekraft F3 zurückgenommen und der Montagebund 22e der Stahlfeder 22 kann sich an dem Sicherungsring 24 über die Anlagefläche 22ea abstützen.

Mit diesem Rückfedern der Stahlfeder 22 ist die Endmontagestelluhg E mit der Vorspannkraft FO (Fig. 3) erreicht.

Die Montage einer nur im elastischen Bereich wirkenden Stahlfeder 22 ist wie vorstehend; in der Endmontagestellung E ist hier die Vorspannkraft FO gemäß der Kraft-Weg-Kennlinie F1, F1.1 erreicht.

## Patentansprüche

1. Vorrichtung zum axialen Vorspannen eines in einem Gehäuse (14) angeordneten Maschinenelementes (12), mit einer ringförmigen, im Querschnitt ein offenes Hohlprofil aufweisenden Stahlfeder (22), an die zumindest einseitig ein am Maschinenelement (12) anlegbarer Ringbund (22c) mit axialer Anlagefläche angeformt ist, und mit einem Sicherungselement (24), über das die Stahlfeder (22) gegen das Maschinenelement (12) mit einer die auftretende Betriebslast übersteigenden Kraft FO beaufschlagbar ist, wobei an die Stahlfeder (22) dem Ringbund (22c) axial gegenüberliegend ein Montagebund (22e) angeformt ist, der mit einer Anlagefläche (22ea) an dem Sicherungselement (24) anliegt, und der Montagebund (22e) mit einem Radius R4 mittel- oder unmittelbar in einen halbkreisförmigen Abschnitt (22a) übergeht, **dadurch gekennzeichnet, dass** die Stahlfeder (22) mit dem rotationssymmetrischen, halbkreisförmigen Abschnitt (22a) mit einem im wesentlichen gleichmäßigen Radius R1 mittel- oder unmittelbar über einen kleineren Radius R2 in den Ringbund (22c) übergeht, dass zwischen dem halbkreisförmigen Abschnitt (22a) und dem Radius R2 des Ringbundes (22c) ein einen definierten Winkel W1 zu einer Senkrechten von zwischen ± 10 Grad, insbesondere um ca. 5° aufweisender, linearer Übergangsbereich (22b) vorgesehen ist, der tangential in die anschließenden Radien R1, R2 übergeht, dass zwischen dem halbkreisförmigen Abschnitt (22a) und dem Radius R4 des Montagebundes (22e) ebenfalls ein linearer Übergangsbereich (22d) vorgesehen ist, der einen Winkel W2 zu einer Senkrechten von zwischen + 5° bis 15° aufweist und der tangential in die anschließenden Radien R2 und R4 übergeht, und dass der axial ausgerichtete Montagebund (22e) an seinem Außenumfang eine gestufte Ausbildung (bei 22f) zum Übergangsbereich (22d) der Stahlfeder (22) aufweist, und zwar zum Ansetzen einer Montagevorrichtung.

2. Vorrichtung nach Anspruch **1,dadurch gekennzeichnet, dass** die Wanddicke T der Stahlfeder (22) nicht mehr als 15% ungleich, bevorzugt jedoch konstant ist.

3. Vorrichtung nach einem der vorhergehenden Ansprüche, **dadurch gekennzeichnet, dass** der engste Querschnitt (bei 22f) der Wanddicke T im Bereich des Radius R4 bei einer gestuften Ausbildung am Außenumfang des Montagebundes (22e) nicht kleiner als 60% beträgt.

4. Vorrichtung nach einem der vorhergehenden Ansprüche, **dadurch gekennzeichnet, dass** die Stahlfeder (22) konstruktiv in ihrer Länge, Wanddicke und/oder Festigkeit so ausgeführt ist, dass sie bei der Montage im elastisch/plastischen Bereich verformbar ist, wobei die Montagekraft F3 größer als die Vorspannkraft und diese größer als die auftretende Betriebskraft F2 ist.

5. Vorrichtung nach einem der vorhergehenden Ansprüche, **dadurch gekennzeichnet, dass** das Maschinenelement im Betrieb axial belastbar ist, sowie ein Wälzlager oder ein angestelltes Lagerpaar ist, das in einem Getriebegehäuse (14) angeordnet ist und zwei Lagerinnenringe (12b, 12c) aufweist, die einerseits axial an einem mit der Welle (18) festen Bauteil (16) anliegen und andererseits über die Stahlfeder (22) und das Sicherungselement (24) axial vorgespannt sind.

6. Vorrichtung nach Anspruch 5, **dadurch gekennzeichnet, dass** das Sicherungselement ein in eine Ringnut (18a) der Welle (18) einsprengbarer Sicherungsring (24) ist.

## Claims

1. A device for axially preloading a machine element (12) arranged in a housing (14) with an annular steel spring (22) having an open hollow profile in cross section and on which is integrally formed, at least at one side, an annular collar (22c) which can be attached to the machine element (12), and having a securing element (24), by means of which the steel spring (22) can be loaded against the machine element (12) with a force FO which exceeds the occurring operating load, wherein on the steel spring (22) axially opposite the annular collar (22c) a mounting collar (22e) is integrally formed, which with a contact surface (22ea) is in contact with the securing element (24), and the mounting collar (22e) merges with a radius R4 indirectly or directly into a semi-circular section (22a), **characterized in that** the steel spring (22) merges with the rotationally symmetric, semi-circular section (22a) with an essentially uniform radius R1 indirectly or directly via a smaller radius R2 into the annular collar (22c), that between the semi-circular section (22a) and the radius R2 of the annular collar (22c) a linear transition area (22b) is provided having a defined angle W1 to a perpendicular of between ± 10 degrees, in particular by approx. 5°, which merges tangentially into the subsequent radii R1, R2, that between the semi-circular section (22a) and the radius R4 of the mounting collar (22e) a linear transition area (22d) is also provided, which has an angle W2 to a perpendicular of between + 5° to 15° and which merges tangentially into the subsequent radii R2 and R4, and that the axially oriented mounting collar (22e) on its outer circumference has a stepped formation (at 22f) to the transition area (22d) of the steel spring (22), specifically for the collaring of a mounting device.

2. A device according to claim 1, **characterized in that** the wall thickness T of the steel spring (22) is not more than 15% unequal, preferably, however, is constant.

3. A device according to one of the preceding claims, **characterized in that** the narrowest cross section (at 22f) of the wall thickness T is not less than 60% in the area of the radius R4 in a stepped formation on the outer circumference of the mounting collar (22e).

4. A device according to one of the preceding claims, **characterized in that** the steel spring (22) is designed constructively in its length, wall thickness and/or strength such that it is deformable during the mounting in the elastic/plastic area, wherein the mounting force F3 is greater than the preloading force and the latter is greater than the occurring operating force F2.

5. A device according to one of the preceding claims, **characterized in that** the machine element in operation is axially loadable, as well as is a rolling bearing and an activated bearing pair, which is arranged in a gear housing (14) and has two bearing inner rings (12b, 12c), which on the one hand are axially in contact with a component (16) fixed to the shaft (18) and on the other hand are axially preloaded by means of the steel spring (22) and the securing element (24).

6. A device according to claim 5, **characterized in that** the securing element is a retaining ring (24) which can be strewed into an annular groove (18a) of the shaft (18).

## Revendications

1. Dispositif pour la précontrainte axiale d'un élément de machine (12) aménagé dans un boîtier (14), comprenant un ressort d'acier (22) de forme annulaire présentant en coupe transversale un profil creux ouvert, sur lequel est formée au moins d'un côté une frette annulaire (22c) applicable sur l'élément de machine (12) et dotée d'une surface d'appui axiale, et un élément de fixation (24), au moyen duquel le ressort d'acier (22) peut être pressé contre l'élément de machine (12) avec une force FO dépassant la charge de fonctionnement courante, dans lequel est formée, sur le ressort d'acier (22), axialement en regard de la frette annulaire (22c) une frette de montage (22e), qui s'applique par une surface d'appui (22ea) sur l'élément de fixation (24) et la frette de montage (22e) se fond avec un rayon R4 indirectement ou directement en une section semi-circulaire (22a), **caractérisé en ce que** le ressort d'acier (22) de section semi-circulaire à symétrie de rotation (22a) d'un rayon sensiblement uniforme se fond indirectement ou directement via un rayon R2 plus petit en la frette annulaire (22c), il est prévu entre la section semi-circulaire (22a) et le rayon R2 de la frette annulaire (22c) une zone de transition linéaire (22b) présentant un angle défini W1 avec une perpendiculaire de ± 10 degrés, en particulier d'environ 5 degrés, qui se fond tangentiellement en rayons connexes R1 et R2, entre la section semi-circulaire (22a) et le rayon R4 de la frette de montage (22e) est également prévue une zone de transition linéaire (22d), qui présente un angle W2 avec une perpendiculaire compris entre +5 et 15 degrés et se fond tangentiellement en rayons connexes R2 et R4 et la frette de montage (22e) orientée axialement présente sur sa périphérie externe un profil étagé (en 22f) avec la zone de transition (22d) du ressort d'acier (22) et ce, pour mettre en place un dispositif de montage.

2. Dispositif selon la revendication 1, **caractérisé en ce que** l'épaisseur de paroi T du ressort d'acier (22) est différente de pas plus de 15 %, mais reste de préférence constante.

3. Dispositif selon l'une quelconque des revendications précédentes, **caractérisé en ce que** la section transversale la plus étroite (en 22f) de l'épaisseur de paroi T dans la zone du rayon R4 lors d'un profil étagé sur la périphérie externe de la frette de montage (22e) n'atteint pas moins de 60 %.

4. Dispositif selon l'une quelconque des revendications précédentes, **caractérisé en ce que** le ressort d'acier (22) est conçu au plan structurel dans sa longueur, son épaisseur de paroi et/ou sa résistance de sorte qu'il puisse être déformé lors du montage dans la zone élastique/plastique, dans lequel la force de montage F3 est plus grande que la force de précontrainte et celle-ci est plus grande que la force d'exploitation courante F2.

5. Dispositif selon l'une quelconque des revendications précédentes, **caractérisé en ce que** l'élément de machine peut être sollicité axialement en cours de fonctionnement, s'agissant par exemple d'un palier à rouleaux ou d'une paire de paliers assemblés, qui est aménagé(e) dans un boîtier de boîte de vitesses (14) et présente deux anneaux internes de palier (12b, 12c), qui, d'une part, s'appliquent axialement sur une pièce (16) fixée à l'arbre (18) et, d'autre part, sont axialement précontraints via le ressort d'acier (22) et l'élément de fixation (24).

6. Dispositif selon la revendication 5, **caractérisé en ce que** l'élément de fixation est un anneau de fixation (24) qui peut être enfoncé dans une rainure annulaire (18a) de l'arbre (18).
